Europäisches Patentamt

European Patent Office

Office européen des brevets

(11) Numéro de publication: **0 420 733 A1**

## (12) DEMANDE DE BREVET EUROPEEN

(21) Numéro de dépôt: 90402625.9

(51) Int. Cl.⁵: **G01M 7/00**

(22) Date de dépôt: 24.09.90

(30) Priorité: 26.09.89 FR 8912583

(43) Date de publication de la demande:
03.04.91 Bulletin 91/14

(84) Etats contractants désignés:
DE ES GB IT NL SE

(71) Demandeur: AEROSPATIALE Société
Nationale Industrielle
37, Boulevard de Montmorency
F-75781 Paris Cédex 16(FR)

(72) Inventeur: **Rollet, Robert**
**67 rue de la Fontaine**
**F-06550 La Roquette sur Siagne(FR)**
Inventeur: **Achor, Jean-Claude**
**154 Allée des Vergnes**
**F-06210 Mandelieu(FR)**

(74) Mandataire: **Mongrédien, André et al**
**c/o SOCIETE DE PROTECTION DES**
**INVENTIONS 25, rue de Ponthieu**
**F-75008 Paris(FR)**

(54) Appareil d'essai en vibrations unidirectionnelles d'un équipement sous atmosphère controlée.

(57) Un appareil d'essai en vibrations unidirectionnelles sous atmosphère contrôlée comprend une enceinte étanche (10) dans laquelle est placé un support (24) pour l'équipement à tester, et un générateur de vibrations (18) situé à l'extérieur de l'enceinte et relié au support par une tige de liaison (22). Cette tige est liée à deux parois opposées (10a,10b) de l'enceinte par deux systèmes d'étanchéité (26,34) identiques et montés en opposition, de façon à éliminer les effets parasites induits par le système d'étanchéité (26) qui doit impérativement être placé entre la tige (22) et la paroi (10a) située entre le générateur de vibrations (18) et le support (24).

FIG. 1

## APPAREIL D'ESSAI EN VIBRATIONS UNIDIRECTIONNELLES D'UN EQUIPEMENT SOUS ATMOSPHERE CONTROLEE.

L'invention concerne un appareil permettant d'essayer un équipement en vibrations unidirectionnelles sous atmosphère contrôlée.

Un tel appareil est destiné à essayer en vibrations des équipements de natures très diverses conçus pour être embarqués sur des engins spatiaux tels que des satellites. Ainsi et uniquement à titre d'exemple, ces équipements peuvent être des mécanismes comportant des pièces mobiles, des structures statiques telles que des réservoirs, ou encore des composants électroniques.

L'essai en vibrations d'un équipement destiné à être embarqué sur un engin spatial constitue une étape essentielle du contrôle de cet équipement. En effet, il est important de s'assurer que les différents équipements embarqués sur l'engin pourront supporter les vibrations très élevées engendrées lors du lancement sans subir des dommages irréparables.

Pour que les essais en vibrations soient représentatifs des conditions réelles, l'équipement doit nécessairement être placé sous une atmosphère contrôlée dont les caractéristiques sont représentatives du milieu dans lequel se trouvera l'équipement lors du lancement. Pour cette raison, on doit placer l'équipement que l'on désire essayer en vibrations à l'intérieur d'une enceinte étanche dans laquelle se trouve un milieu contrôlé de caractéristiques différentes de celles du milieu extérieur, notamment en ce qui concerne la pression.

Pour que le générateur de vibrations, habituellement constitué par un pot vibrant, puisse fonctionner de façon satisfaisante, il est normalement placé à l'extérieur de l'enceinte étanche et relié à un support d'équipement interne à l'enceinte par une tige de liaison rigide. Cette tige de liaison traverse de façon étanche une paroi de l'enceinte située entre le support et le pot vibrant. A l'emplacement de cette traversée, on utilise habituellement un soufflet d'étanchéité dont les faces opposées sont soumises aux pressions différentes régnant respectivement à l'intérieur et à l'extérieur de l'enceinte. Sous l'effet de cette différence de pressions, des efforts parasites s'ajoutent aux vibrations qui sont transmises à l'équipement en cours d'essai, ce qui a pour effet de fausser cet essai et conduit à des mesures imprécises. De plus, d'autres effets parasites sont induits par le fait que le mouvement de va-et-vient de la tige de liaison produit par les vibrations se traduit alternativement par un accroissement et une diminution du volume intérieur de l'enceinte.

L'invention a précisément pour objet un appareil d'essai en vibrations unidirectionnelles et sous atmosphère contrôlée dont la conception originale lui permet de supprimer tout effort parasite et toute variation de volume à l'intérieur de l'enceinte, afin d'améliorer de façon sensible la précision des mesures effectuées.

Selon l'invention, ce résultat est obtenu au moyen d'un appareil d'essai en vibrations unidirectionnelles sous atmosphère contrôlée, comprenant un support placé à l'intérieur d'une enceinte étanche dans laquelle règne une atmosphère contrôlée, un générateur de vibrations placé au dehors de l'enceinte, une tige de liaison rigide reliant le générateur de vibrations audit support, au travers d'une première paroi fixe de l'enceinte, caractérisé par le fait qu'un premier et un deuxième morceaux de paroi mobiles sont liés rigidement à la tige de liaison à proximité respectivement de la première paroi fixe et d'une deuxième paroi fixe de l'enceinte opposée à la première paroi fixe, un premier et un deuxième soufflets d'étanchéité reliant respectivement le premier morceau de paroi mobile à la première paroi fixe et le deuxième morceau de paroi mobile à la deuxième paroi fixe.

Dans un mode de réalisation préféré de l'invention, étant donné que les vibrations délivrées par le générateur de vibrations sont unidirectionnnelles, il est intéressant de diriger parfaitement les vibrations appliquées sur l'équipement en cours d'essai en équipant la première et la deuxième parois de l'enceinte de moyens de guidage en translation dans lesquels est reçue la tige de liaison.

Pour tenir compte des problèmes d'alignement entre l'organe de sortie du générateur de vibrations et la partie de tige de liaison reçue dans ces moyens de guidage, la tige de liaison comprend avantageusement, entre les moyens de guidage fixés à la première paroi et le générateur de vibrations, des moyens formant une double articulation et comprenant de préférence deux ensembles comportant chacun deux groupes de deux méplats opposés disposés à 90° l'un par rapport à l'autre sur la tige de liaison.

Deux modes de réalisation de l'invention vont à présent être décrits, à titre d'exemples non limitatifs, en se référant aux dessins annexés, dans lesquels :

- la figure 1 est une vue en coupe représentant de façon très schématique un appareil d'essai en vibrations conforme à l'invention ; et

- la figure 2 est une vue comparable à la figure 1 représentant un deuxième mode de réalisation de l'appareil d'essai selon l'invention, dans lequel la direction des vibrations est parfaitement contrôlée.

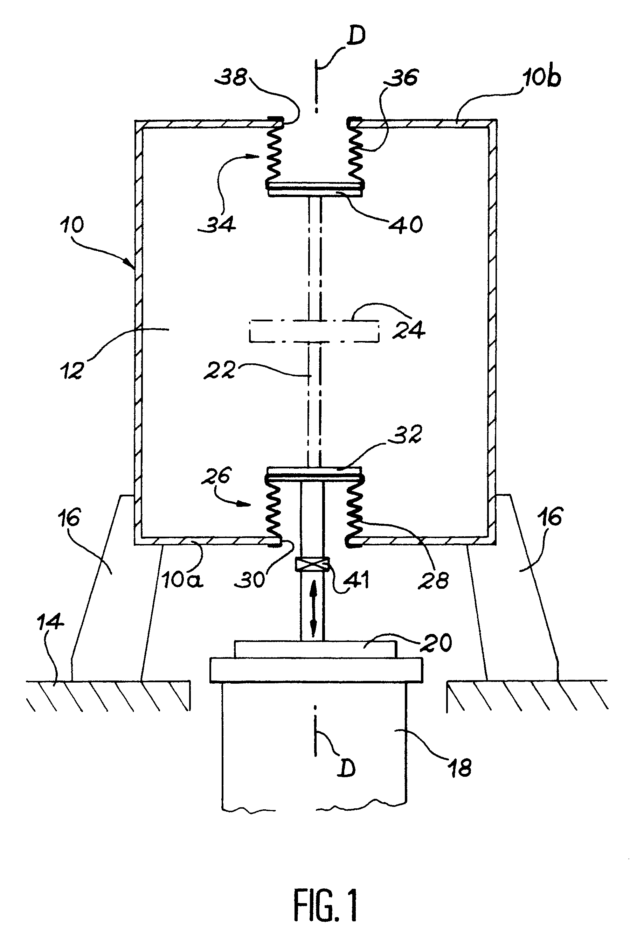

Sur la figure 1, on a représenté de façon schématique un appareil d'essai en vibrations unidirectionnelles sous atmosphère contrôlée conforme à un premier mode de réalisation de l'invention.

Cet appareil d'essai comprend une enceinte étanche 10 délimitant intérieurement un volume clos 12 dans lequel se trouve un milieu présentant des caractéristiques différentes de celles du milieu extérieur. En particulier, le milieu contenu dans le volume 12 peut être de l'air à une pression inférieure à la pression atmosphérique. Les conditions régnant à l'intérieur du volume 12 sont contrôlées en permanence par des circuits appropriés, associés à l'enceinte 10 et qui ne sont pas représentés sur la figure 1. Ces circuits peuvent notamment être des circuits de vide ou des circuits de ventilation et de filtration bien connus des spécialistes.

L'enceinte étanche 10 est reliée rigidement à une structure de supportage fixe 14 par toute structure convenable telle que des pieds 16.

La structure de supportage 14 supporte également un générateur de vibrations unidirectionnelles 18 constitué par exemple par un pot vibrant dont un organe de sortie 20 est animé d'un mouvement de va-et-vient à haute fréquence selon une direction donnée figurée par la droite D-D sur la figure 1.

Etant donné que le générateur de vibrations 18 est placé à l'extérieur de l'enceinte 10 alors que l'équipement que l'on désire tester en vibrations doit être placé à l'intérieur de cette dernière, une tige de liaison rigide 22 est prévue pour relier l'organe de sortie 20 du générateur de vibrations à un support d'équipement 24 placé à l'intérieur de l'enceinte étanche 10. Cette tige de liaison 22 est une tige cylindrique rectiligne dont l'axe D-D est orienté selon la direction du mouvement de va-et-vient auquel est soumis l'organe de sortie 20 du générateur de vibrations lorsque ce dernier est actionné. Dans l'exemple représenté, cet axe D-D est vertical et le générateur de vibrations 18 est placé en dessous de l'enceinte 10, qui est une enceinte cylindrique centrée sur cet axe.

Le support d'équipement 24 présente quant à lui une structure adaptée à la nature et à la forme de l'équipement que l'on désire contrôler, de sorte que sa configuration diffère selon cet équipement. A titre d'exemple, il peut s'agir notamment d'un cadre équipé de moyens de fixation tels que des vis ou des tiges filetées.

Etant donné que le générateur de vibrations 18 est placé à l'extérieur de l'enceinte 10 alors que le support 24 est situé à l'intérieur de cette dernière, la tige de liaison 22 traverse nécessairement l'une 10a des parois de cette enceinte. De préférence, cette paroi 10a est une paroi plane orientée selon une direction perpendiculaire à l'axe D-D. La tige de liaison 22 est donc perpendiculaire à cette paroi 10a, qui constitue le fond horizontal de l'enceinte 10 dans l'exemple représenté.

Afin de garantir l'étanchéité de la traversée de la paroi 10a par la tige de liaison 22 malgré le mouvement alternatif de va-et-vient transmis à cette dernière par le générateur de vibrations 18, un premier dispositif d'étanchéité désigné de façon générale par la référence 26 est prévu entre cette paroi 10a et la tige 22.

Ce dispositif d'étanchéité 26 comprend un soufflet d'étanchéité 28 dont une extrémité est fixée de façon étanche sur le bord d'une ouverture circulaire 30 formée dans la paroi 10a et centrée sur l'axe de la tige 22. L'extrémité opposée du soufflet 28 est fixée de façon étanche sur le bord périphérique d'un morceau de paroi mobile 32 en forme de disque fixé sur la tige de liaison 22 et centré sur l'axe de cette tige. Le morceau de paroi mobile 32 est parallèle à la paroi 10a de l'enceinte étanche 10 et décalé vers l'intérieur de cette dernière par rapport à la paroi 10a. Les diamètres intérieurs de l'ouverture 30 et du morceau de paroi mobile 32 sont tels que la fibre neutre du soufflet d'étanchéité 28 présente une configuration généralement cylindrique centrée sur l'axe de la tige 22.

Si l'appareil d'essai était réalisé de telle sorte que le support d'équipement 24 soit placé à l'extrémité de la tige de liaison 22 à l'intérieur de l'enceinte étanche 10, la structure du dispositif d'étanchéité 26 qui vient d'être décrit pourrait induire des erreurs dans les essais en vibrations effectués. En effet, le morceau de paroi mobile 32 est soumis en permanence à la différence des pressions entre le milieu extérieur et le milieu contenu dans le volume 12. Un effort parasite venant se superposer à l'effort exercé par le générateur de vibrations 18 serait alors appliqué en permanence sur la tige 22. Par ailleurs, chaque mouvement de va-et-vient de la tige de liaison 22 conduirait à des augmentations et à des diminutions successives du volume intérieur 12 de l'enceinte ajoutant une autre source d'erreurs dans les mesures.

Conformément à l'invention, toutes ces sources d'erreurs sont éliminées en prolongeant la tige de liaison 22 jusqu'à une paroi 10b de l'enceinte 10 opposée à la paroi 10a et en reliant la tige de liaison 22 à cette paroi 10b par un dispositif d'étanchéité 34 totalement identique au dispositif 26 et disposé de façon symétrique ou en opposition par rapport à ce dernier.

Ainsi, la paroi 10b étant de préférence plane et parallèle à la paroi 10a, le dispositif d'étanchéité 34 comporte un deuxième soufflet d'étanchéité 36 centré sur l'axe de la tige 22, dont une extrémité est fixée de façon étanche sur une ouverture circulaire 38 formée dans la paroi 10b et centrée sur l'axe de la tige 22. L'extrémité opposée du soufflet 36 est fixée de façon étanche sur le bord périphérique d'un morceau de paroi mobile 40, en forme de disque, fixé à l'extrémité de la tige de liaison 22 et centré sur l'axe de cette dernière. Le morceau de paroi mobile 40 est parallèle à la paroi 10b de l'enceinte et décalé vers l'intérieur de cette dernière par rapport à la paroi 10b sur une distance approximativement égale à celle qui sépare le morceau de paroi mobile 32 de la paroi 10a de l'enceinte. Les dimensions des ouvertures 30 et 38, des morceaux de paroi mobiles 32 et 40 et des soufflets d'étanchéité 28 et 36 sont par ailleurs identiques.

Grâce à l'agencement qui vient d'être décrit, les efforts parasites qui sont appliqués sur le morceau de paroi mobile 32 par suite de la différence de pression entre l'intérieur et l'extérieur de l'enceinte 10 sont parfaitement équilibrés par les efforts de même origine appliqués en sens inverse sur le morceau de paroi mobile 40. Ces efforts parasites sont ainsi annulés et ne viennent pas perturber les efforts appliqués alternativement en sens inverse sur la tige de liaison 22 par le générateur de vibrations 18.

De plus, les diminutions et les accroissements alternatifs du volume intérieur 12 de l'enceinte 10 résultant du déplacement du tronçon de paroi mobile 32 avec la tige de liaison 22 sont également annulés par les déplacements du tronçon de paroi mobile 40 également fixé sur la tige 22.

Avantageusement, la partie de la tige de liaison 22 située à l'extérieur de l'enceinte 10 comporte un raccord déconnectable 41 dont la déconnexion permet de transporter à volonté l'enceinte 10 sur un site quelconque.

La description qui précède fait apparaître que l'appareil d'essai selon l'invention permet d'effectuer des essais en vibrations unidirectionnelles sous atmos phère contrôlée sans que les résultats des mesures soient perturbés par la structure de l'appareil.

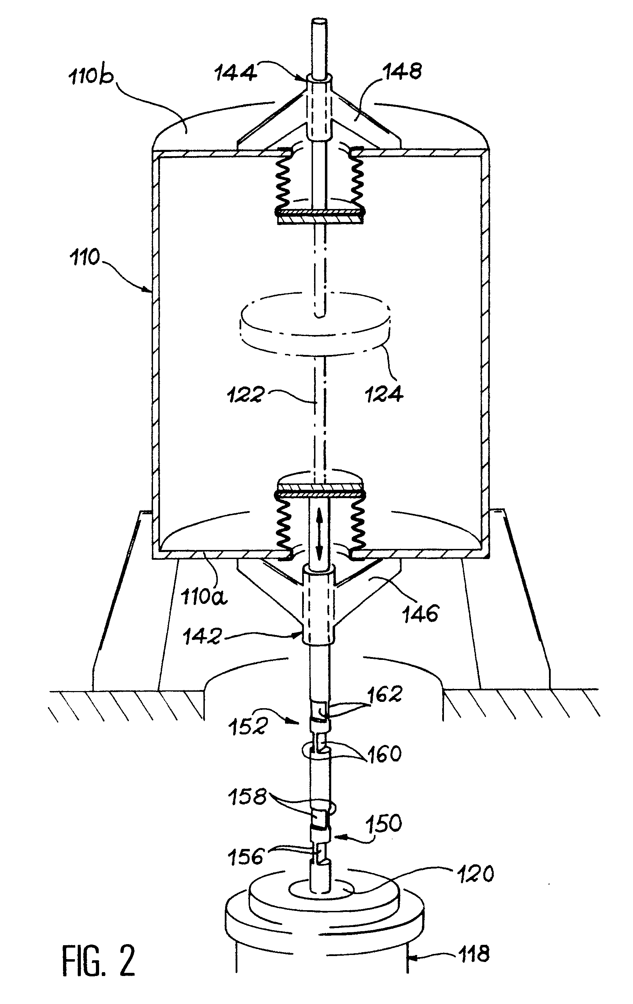

Sur la figure 2, on a représenté un deuxième mode de réalisation de l'appareil d'essai selon l'invention.

Dans ce deuxième mode de réalisation, toutes les caractéristiques de l'appareil d'essai décrit précédemment en se référant à la figure 1 sont conservées. Ces caractéristiques ne seront donc pas décrites une nouvelle fois. Pour faciliter la compréhension, les éléments identiques à ceux du premier mode de réalisation sont désignés par les mêmes chiffres de référence augmentés de 100.

Le mode de réalisation de la figure 2 constitue un perfectionnement du mode de réalisation de la figure 1. Ce perfectionnement vise principalement à assurer le caractère parfaitement unidirectionnel des vibrations appliquées sur le support d'équipement 124. Pour cela, tout mouvement latéral de la tige de liaison 122 et du support 124 à l'intérieur de l'enceinte 110 est empêché par des moyens de guidage en translation 142 et 144 fixés respectivement sur les parois 110a et 110b de l'enceinte 110 et dans lesquels peut coulisser parallèlement à son axe la tige de liaison 122.

Les moyens de guidage 142 et 144 sont placés à l'extérieur de l'enceinte étanche 110 et ils sont reliés respectivement aux parois 110a et 110b par des pattes de fixation 146 et 148. Ces moyens de guidage peuvent être constitués par de simples paliers dans lesquels la tige de liaison 122 peut coulisser et tourner librement. Ils peuvent aussi être constitués par des glissières empêchant toute rotation de la tige 122, telles que des glissières à bille.

Dans cet agencement de la figure 2 dans lequel la partie de la tige de liaison 122 traversant l'enceinte étanche 110 est parfaitement guidée en translation par rapport à cette dernière, il est très difficile d'assurer un alignement satisfaisant de l'axe de l'organe de sortie 120 du générateur de vibrations 118 par rapport à cette partie guidée de la tige 122.

Pour cette raison, on équipe avantageusement la partie de la tige de liaison 122 située entre le générateur de vibrations 118 et le moyen de guidage 142 lié à la paroi 110a d'une double articulation. Cette double articulation comprend, dans le mode de réalisation préféré illustré sur la figure 2, deux ensembles identiques 150 et 152, décalés selon l'axe de la tige 122 et permettant chacun aux axes des tronçons de tiges reliés par ces ensembles d'être légèrement inclinés selon une direction quelconque, tout en garantissant la transmission parfaite du mouvement de va-et-vient appliqué sur la tige par le générateur de vibrations.

Chacun des ensembles 150 et 152 comprend deux groupes de deux méplats opposés usinés directement sur la tige 122, parallèlement à son axe, selon deux directions disposées à 90° l'une par rapport à l'autre. Ainsi, l'ensemble 150 comprend un premier groupe de deux méplats parallèles et opposés 156 et un deuxième groupe de deux méplats parallèles et opposés 158 orientés à 90° par rapport aux méplats 156. De même, l'ensemble 152 comprend un premier groupe de deux méplats parallèles et opposés 160 et un deuxième groupe de deux méplats parallèles et opposés 162 orientés à 90° par rapport aux méplats 160.

De préférence, bien que de façon facultative, les méplats 156 et 160 d'une part, et les méplats 158 et 162 d'autre part sont orientés dans les mêmes directions.

Chaque groupe de deux méplats opposés ainsi formé sur la tige 122 réduit cette dernière à une lame présentant une certaine souplesse dans un plan passant par l'axe de la tige et perpendiculaire aux méplats. Chaque ensemble tel que 150 et 152 définit ainsi sur la tige 122 deux zones dans lesquelles la tige présente une relative souplesse dans deux plans perpendiculaires entre eux et passant par l'axe de la tige. L'association des deux ensembles 150 et 152 permet donc d'assurer une transmission satisfaisante du mouvement de l'organe de sortie 120 du générateur de vibrations 118 à la partie de la tige de guidage 122 reçue dans les moyens de guidage 142 et 144, malgré un éventuel désalignement des axes de ces deux parties. L'expérience a montré qu'un tel agencement permet de transmettre intégralement les vibrations fournies par le générateur 118, sans modification de leurs caractéristiques.

Bien entendu, l'invention n'est pas limitée au mode de réalisation qui vient d'être décrit à titre d'exemple mais en couvre toutes les variantes. Ainsi, la forme de l'enceinte étanche 10 peut être différente de celle qui a été décrite et les parois 10a et 10b peuvent ne pas être planes.

## Revendications

1. Appareil d'essai en vibrations unidirectionnelles sous atmosphère contrôlée, comprenant un support (24) placé à l'intérieur d'une enceinte étanche (10) dans laquelle règne une atmosphère contrôlée, un générateur de vibrations (18) placé au dehors de l'enceinte, une tige de liaison rigide (22) reliant le générateur de vibrations audit support, au travers d'une première paroi fixe (10a) de l'enceinte, caractérisé par le fait qu'un premier et un deuxième morceaux de paroi mobiles (32,40) sont liés rigidement à la tige de liaison à proximité respectivement de la première paroi fixe (10a) et d'une deuxième paroi fixe (10b) de l'enceinte opposée à la première paroi fixe, un premier et un deuxième soufflets d'étanchéité (28,36) reliant respectivement le premier morceau de paroi mobile à la première paroi fixe et le deuxième morceau de paroi mobile à la deuxième paroi fixe.

2. Appareil selon la revendication 1, caractérisé par le fait que la tige de liaison (22) étant une tige rectiligne orientée selon une direction sensiblement perpendiculaire à la première et à la deuxième parois fixes (10a, 10b) de l'enceinte, le premier et le deuxième morceaux de paroi mobiles (32,40) sont sensiblement parallèles à la première et à la deuxième parois et décalés vers l'intérieur de l'enceinte par rapport à ces dernières, et les premier et deuxième soufflets d'étanchéité (28,36) sont centrés sur la tige de liaison.

3. Appareil selon l'une quelconque des revendications 1 et 2, caractérisé par le fait que les premier et deuxième morceaux de paroi mobiles (32,40) sont de mêmes dimensions, de même que le premier et le deuxième soufflets d'étanchéité (28,30).

4. Appareil selon l'une quelconque des revendications 1 à 3, caractérisé par le fait que la tige de liaison (122) est reçue dans des moyens de guidage en translation (142,144) fixés respectivement à la première et à la deuxième parois (110a,110b) de l'enceinte.

5. Appareil selon la revendication 4, caractérisé par le fait que la tige de liaison (122) comprend, entre les moyens de guidage fixés à la première paroi et le générateur de vibrations, des moyens formant une double articulation (150,152).

6. Appareil selon la revendication 5, caractérisé par le fait que les moyens formant une double articulation comprennent deux ensembles (150,152) comprenant chacun deux groupes de deux méplats opposés (156,158 ; 160,162) disposés à 90° l'un par rapport à l'autre sur la tige de liaison.

7. Appareil selon l'une quelconque des revendications précédentes, caractérisé par le fait que la tige de liaison (22) présente des moyens de raccordement démontables (41) entre une partie de la tige liée au générateur de vibrations (18) et une partie de la tige liée à l'enceinte (10).

FIG. 1

FIG. 2

**Office européen
des brevets**

**RAPPORT DE RECHERCHE
EUROPEENNE**

Numéro de la demande

**EP 90 40 2625**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 031 160 (DERRITRON ELECTRONICS LTD) <br> * page 1, lignes 116 - 130 * * page 2, lignes 1 - 24; figures 1-3 * <br><br> – – – – | 1 | G 01 M 7/00 |
| | | | **DOMAINES TECHNIQUES RECHERCHES (Int. Cl.5)** |
| | | | G 01 M |

Le présent rapport de recherche a été établi pour toutes les revendications

| Lieu de la recherche | Date d'achèvement de la recherche | Examinateur |
|---|---|---|
| La Haye | 07 novembre 90 | ZAFIROPOULOS N. |